# EUROPEAN PATENT APPLICATION

(11) **EP 4 835 550 A1**
(43) Date of publication of application: **04.11.2026**
(21) Application number: 24912372.0
(22) Date of filing: 11.12.2024
(51) Int. Cl.: G02C 13/00, G02B 1/14, G02B 1/18, G02C 7/00

(54) **LAMINATE AND METHOD FOR MANUFACTURING SPECTACLE LENS**

(30) Priority: 27.12.2023 JP 2023221300
(71) Applicant: Nikon-Essilor Co., Ltd., Tokyo 130-0026 (JP)
(72) Inventor: YANASE Shogo, Tokyo 130-0026 (JP); WAKIYASU Hideyuki, Tokyo 130-0026 (JP); OGASAWARA Hisashi, Tokyo 130-0026 (JP)
(74) Representative: Viering, Jentschura & Partner mbB Patent- und Rechtsanwälte
(86) International application number: PCT/JP2024/043791
(87) International publication number: WO 2025/142483

(57) **Abstract**

An object of the present disclosure is to provide a laminate that is easily subjected to lens edging processing, and has excellent water- and oil-repellency after a first temporary protective layer and a second temporary protective layer are removed. The laminate of the present disclosure is a laminate including a spectacle lens substrate, a water- and oil-repellent layer, a first temporary protective layer, and a second temporary protective layer in this order, wherein the first temporary protective layer contains a metal fluoride or titanium oxide, and the second temporary protective layer is a metal layer.

## Description

### TECHNICAL FIELD

The present disclosure relates to a laminate and a method for manufacturing a spectacle lens.

### BACKGROUND ART

Patent Literature 1 discloses "a lens edging processing method for subjecting a spectacle lens with an oil repellent coating to lens edging processing to various lens shapes by a lens edging machine, the method including the steps of previously attaching, to both surfaces of a lens to be processed, a tape with an adhesive in which the surface of a polymer film having a thickness of 10 to 100 µm and a Young's modulus of 1 GPa or more is coated with a silicon-based adhesive, and then setting the lens in the lens edging machine".

### CITATION LIST

### PATENT LITERATURE

Patent Literature 1: JP 2004-347660 A

### SUMMARY OF INVENTION

The present disclosure relates to a laminate including a spectacle lens substrate, a water- and oil-repellent layer, a first temporary protective layer, and a second temporary protective layer in this order, wherein the first temporary protective layer contains a metal fluoride or titanium oxide, and the second temporary protective layer is a metal layer.

### BRIEF DESCRIPTION OF THE DRAWINGS

FIG. 1 is a schematic cross-sectional view of a laminate.
FIG. 2 is a schematic view of a part of a grinding device.

### DESCRIPTION OF EMBODIMENTS

Hereinafter, the present disclosure will be described in detail.

A laminate of the present disclosure is easily subjected to lens edging processing, and has excellent water- and oil-repellency after a first temporary protective layer and a second temporary protective layer are removed. It is to be noted that the phrase "easily subjected to lens edging processing" means that grinding can be performed with a small axial deviation and a small horizontal deviation from design values during the lens edging processing.

Hereinafter, the first temporary protective layer and the second temporary protective layer are also collectively and simply referred to as "temporary protective layer".

Although the description of components described below may be made based on representative embodiments of the present disclosure, the present disclosure is not limited to such embodiments.

In the present specification, a numerical range represented using "to" means a range including numerical values described before and after "to" as a lower limit value and an upper limit value.

In the present specification, when two or more kinds of certain components are present, the "content" of the components means the total content of the two or more kinds of components.

In the present specification, regarding numerical ranges that are described stepwise, an upper limit value or a lower limit value described in a certain numerical range may be substituted with an upper limit value or a lower limit value of another stepwise numerical range. Regarding the numerical range described in the present specification, an upper limit value or a lower limit value described in a certain numerical range may be substituted with a value shown in examples.

In the present specification, a combination of two or more preferred aspects is a more preferred aspect.

### [Laminate]

The laminate is preferably used for fixing the laminate by pressing a fixing member against the second temporary protective layer in the laminate and grinding the laminate. In other words, the laminate is preferably used in a step 1 in a method for manufacturing a spectacle lens described later.

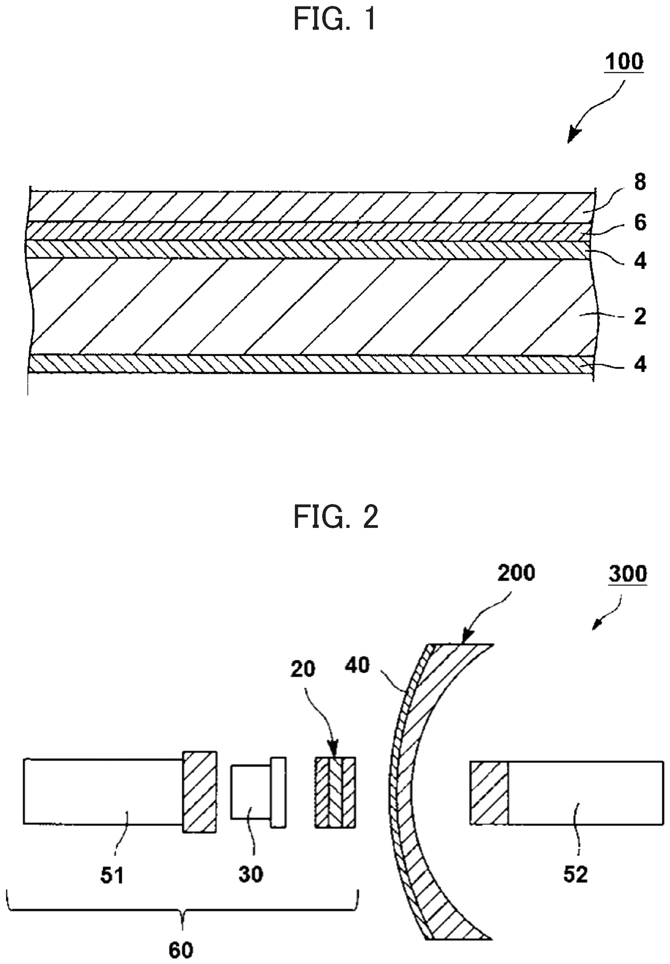

FIG. 1 is a schematic cross-sectional view of a laminate 100. The laminate 100 includes a water- and oil-repellent layer 4 on a spectacle lens substrate 2, a first temporary protective layer 6 on the water- and oil-repellent layer 4, and a second temporary protective layer 8 on the first temporary protective layer 6.

The laminate 100 may further include other layers such as an antireflection layer, a primer layer, and a hard coat layer described later. When the laminate 100 includes the other layers, it is preferable that the other layers are disposed between the spectacle lens substrate 2 and the water- and oil-repellent layer 4.

The laminate 100 of FIG. 1 has an aspect in which the water- and oil-repellent layer 4 is provided on both surfaces of the spectacle lens substrate 2, and the first temporary protective layer 6 and the second temporary protective layer 8 are provided only on one surface of the spectacle lens substrate 2, but is not limited to this aspect. For example, the laminate may include the water- and oil-repellent layer, the first temporary protective layer, and the second temporary protective layer on both surfaces of the spectacle lens substrate.

The luminous transmittance of the laminate is preferably less than 100%, more preferably 90% or less, and still more preferably 88% or less. The lower limit is preferably 0% or more, more preferably 10% or more, and still more preferably 20% or more.

Examples of a method for adjusting the luminous transmittance include a method for adjusting the thickness of each layer (for example, the first temporary protective layer, the second temporary protective layer, and the like) of the laminate.

The luminous transmittance is an average value of transmittances at a wavelength of 380 to 780 nm, and can be measured using a spectrometer.

### <Spectacle Lens Substrate>

Examples of the spectacle lens substrate include a spectacle lens substrate composed of an organic material or an inorganic material, and a spectacle lens substrate (plastic lens substrate or the like) composed of an organic material is preferable.

Examples of the spectacle lens substrate include a finish lens in which a convex surface and a concave surface are optically finished and molded according to a desired power, a semi-finished lens in which only a convex surface is finished as an optical surface (for example, a spherical surface, a rotationally symmetric aspherical surface, and a progressive surface and the like), and a lens in which a concave surface of the semi-finished lens is processed and polished according to a wearer's prescription.

Examples of the organic material include an acrylic resin, a methacrylic resin, a thiourethane-based resin, an allyl-based resin, an episulfide-based resin, a polycarbonate-based resin, a polyurethane-based resin, a polyester-based resin, a polystyrene-based resin, a polyethersulfone-based resin, a poly(4-methyl pentene)-1-based resin, a diethylene glycol bisallyl carbonate-based resin (CR-39), and a polyvinyl chloride-based resin.

The thickness of the spectacle lens substrate is preferably 1 to 30 mm from the viewpoint of handleability.

The spectacle lens substrate may be opaque or colored as long as it has translucency.

### <Water- And Oil-Repellent Layer>

The laminate includes a water- and oil-repellent layer on the spectacle lens substrate.

The water- and oil-repellent layer preferably contains at least one selected from the group consisting of an organosilicon compound, a hydrolysate thereof, and a hydrolysis condensate thereof.

The hydrolysate of the organosilicon compound means a compound produced by hydrolyzing hydrolyzable groups in the organosilicon compound, the organosilicon compound having the hydrolyzable groups. The hydrolysate of the organosilicon compound may be any of a complete hydrolysate in which all of the hydrolyzable groups in the organosilicon compound are hydrolyzed, a partial hydrolysate in which some of the hydrolyzable groups are decomposed, and a mixture thereof.

The hydrolysis condensate of the organosilicon compound means a compound produced by condensation of a hydrolysate of the organosilicon compound, the organosilicon compound having the hydrolyzable groups. The hydrolysis condensate of the organosilicon compound may be any of a complete hydrolysis condensate in which all of the hydrolyzed groups in the hydrolysate are condensed, a partial hydrolysis condensate in which only some of the hydrolyzed groups are condensed, and a mixture thereof.

Examples of the organosilicon compound include a silane compound, a silazane compound, a silanol compound, a siloxane compound, a silicate compound, and a silyl ester compound, and a silane compound is preferable.

Examples of the hydrolyzable group include an alkoxy group, a halogen atom, a cyano group, an acetoxy group, and an isocyanate group.

The organosilicon compound preferably has a fluorine atom-containing group.

Examples of the fluorine atom-containing group include a group having a perfluorocarbon structure and a group having a perfluoropolyether structure.

Examples of the organosilicon compound include organosilicon compounds described in WO 2020/039795 A, US 4410563, EP 0203730, EP 749021, EP 844265, and EP 933377.

The thickness of the water- and oil-repellent layer is preferably 1 to 1000 nm.

The water- and oil-repellent layer may be either a single layer or a multilayer.

### <First Temporary Protective Layer>

The laminate includes the first temporary protective layer on the water- and oil-repellent layer.

The laminate preferably includes the first temporary protective layer adjacent to the water- and oil-repellent layer. Since the laminate includes the first temporary protective layer, the temporary protective layer is easily removed from the water- and oil-repellent layer in a step 2 described later, and the influence on the water- and oil-repellency of the water- and oil-repellent layer after the temporary protective layer is removed is small.

The first temporary protective layer contains a metal fluoride or titanium oxide.

As the metal fluoride, magnesium fluoride, calcium fluoride, lanthanum fluoride, neodymium fluoride, or cerium fluoride is preferable, and magnesium fluoride is more preferable.

When the first temporary protective layer contains the metal fluoride, the first temporary protective layer is also preferably a metal fluoride layer.

The metal fluorides may be used singly or in combination of two or more kinds thereof.

When the first temporary protective layer contains the metal fluoride, the content of the metal fluoride is preferably 50% by mass or more, more preferably 80% by mass or more, still more preferably 95% by mass or more, and particularly preferably 99% by mass or more, with respect to the total mass of the first temporary protective layer. The upper limit is preferably 100% by mass or less. Among them, the content of the magnesium fluoride preferably satisfies the above preferred range.

The titanium oxide may be any of Ti₂O₃, TiO₂, Ti₂O, and TiO, but it is preferable to contain Ti₂O₃ from the viewpoint of a more excellent effect of the present invention.

The titanium oxide may be either amorphous or crystalline, but is preferably crystalline. The crystal system is not particularly limited, but for example, when TiO₂ is contained as the titanium oxide, the crystal system of TiO₂ is preferably a rutile type.

The first temporary protective layer is also preferably a titanium oxide layer. The form of the titanium oxide can be adjusted by a method for forming the first temporary protective layer (for example, a target substance, an atmosphere and a temperature at the time of film formation, and the like).

When the first temporary protective layer contains the titanium oxide, the content of the titanium oxide is preferably 50% by mass or more, more preferably 80% by mass or more, still more preferably 95% by mass or more, and particularly preferably 99% by mass or more, with respect to the total mass of the first temporary protective layer. The upper limit is preferably 100% by mass or less.

The thickness of the first temporary protective layer is preferably 3 nm or more and 400 nm or less, more preferably 5 nm or more and 300 nm or less, and still more preferably more than 10 nm and less than 100 nm.

In particular, when the first temporary protective layer contains the metal fluoride, the thickness of the first temporary protective layer is preferably 10 to 100 nm, and more preferably more than 10 nm and less than 100 nm.

When the first temporary protective layer contains the titanium oxide, the thickness of the first temporary protective layer is preferably more than 20 nm and less than 80 nm, and more preferably 25 to 75 nm.

The thickness of the first temporary protective layer can be measured using, for example, a quartz oscillator type film thickness meter.

### <Second Temporary Protective Layer>

The laminate includes the second temporary protective layer on the first temporary protective layer.

The laminate preferably includes the second temporary protective layer adjacent to the first temporary protective layer. When the laminate includes the second temporary protective layer, the adhesion between the fixing member and the laminate in the step 1 described later is excellent, the axial deviation and the like at the time of grinding the laminate can be suppressed, and the lens edging processing is easily performed.

The second temporary protective layer is a metal layer.

A metal in the metal layer is not particularly limited, but preferably contains at least one selected from the group consisting of aluminum, zinc, copper, and nickel (hereinafter, also referred to as "specific metal"), and more preferably contains aluminum.

The metal may be either a pure metal or an alloy, and is preferably a pure metal.

When the second temporary protective layer contains the specific metal, the second temporary protective layer may further contain other metal. Examples of the other metal include known metals.

The content of the specific metal is preferably 50% by mass or more, more preferably 80% by mass or more, still more preferably 95% by mass or more, and particularly preferably 99% by mass or more, with respect to the total mass of the second temporary protective layer. The upper limit is preferably 100% by mass or less. Among them, the content of the aluminum preferably satisfies the above preferred range.

When the first temporary protective layer contains the metal fluoride, the thickness of the second temporary protective layer is preferably 5 nm or more, more preferably 10 nm or more, and still more preferably more than 10 nm. The upper limit is preferably 150 nm or less, more preferably 100 nm or less, and still more preferably 80 nm or less.

When the first temporary protective layer contains the titanium oxide, the thickness of the second temporary protective layer is preferably 5 nm or more, and more preferably more than 5 nm. The upper limit is preferably less than 150 nm, and more preferably 100 nm or less.

When the first temporary protective layer contains the metal fluoride, the total thickness of the first temporary protective layer and the second temporary protective layer is preferably 10 nm or more, more preferably 15 nm or more, and still more preferably 20 nm or more. When the first temporary protective layer contains the metal fluoride, the upper limit of the total thickness of the first temporary protective layer and the second temporary protective layer is not particularly limited, but is preferably 400 nm or less, more preferably 350 nm or less, and still more preferably 300 nm or less.

When the first temporary protective layer contains the titanium oxide, the total thickness of the first temporary protective layer and the second temporary protective layer is preferably 40 nm or more and 70 nm or less.

The ratio of the thickness of the first temporary protective layer to the thickness of the second temporary protective layer is preferably 40 or less, and more preferably 20 or less. The ratio of the thickness of the first temporary protective layer to the thickness of the second temporary protective layer is preferably 0.05 or more, and more preferably 0.1 or more.

### <Other Layers>

The laminate may include other layers in addition to the above layers.

Examples of the other layers include a primer layer, a hard coat layer, an antireflection layer, and an intermediate layer. When the laminate includes the intermediate layer, the laminate preferably includes the intermediate layer on the side opposite to the first temporary protective layer and the second temporary protective layer of the water- and oil-repellent layer.

When the laminate includes the other layers, the laminate preferably further includes the primer layer, the hard coat layer, and the antireflection layer in this order from the spectacle lens substrate side between the spectacle lens substrate and the water- and oil-repellent layer.

The primer layer is a layer that improves the adhesion of the hard coat layer to the spectacle lens substrate.

The primer layer preferably contains a resin, and more preferably contains a urethane-based resin, an epoxy-based resin, a phenol-based resin, a polyimide-based resin, a polyester-based resin, a bismaleimide-based resin, or a polyolefin-based resin.

The thickness of the primer layer is preferably 0.3 to 2 µm.

The hard coat layer is a layer disposed on the spectacle lens substrate, and is a layer that imparts scratch resistance to the spectacle lens substrate.

Examples of the hard coat layer include an organic hard coat layer, an inorganic hard coat layer, and an organic-inorganic hybrid hard coat layer.

The thickness of the hard coat layer is preferably 1.0 to 20.0 µm, and more preferably 1.5 to 15.0 µm.

A hard coat layer-forming composition preferably contains at least one selected from the group consisting of an inorganic compound, a polymerization initiator, and an organic solvent.

Examples of the inorganic compound include an inorganic oxide and silsesquioxane.

The inorganic oxide is preferably metal oxide particles.

Examples of the metal oxide particles include oxide particles of at least one metal selected from the group consisting of Ti, Zr, Si, Al, Sn, Sb, Ta, Ce, La, Fe, Zn, W, and In, and composite metal oxide particles thereof. The composite metal oxide particles are oxide particles containing two or more metals (metal atoms).

The inorganic oxide particles preferably contain at least one selected from the group consisting of SiO₂ (silicon oxide), Al₂O₃ (aluminum oxide), SnO₂ (tin oxide), ZrO₂ (zirconium oxide), and TiO₂ (titanium oxide), and more preferably contain at least one selected from the group consisting of SiO₂ and ZrO₂.

The silsesquioxane is a silane compound obtained by hydrolyzing a trifunctional silane compound such as alkoxysilane, chlorosilane, or silanol.

The antireflection layer may have either a single layer structure or a multilayer structure.

The antireflection layer is preferably an inorganic antireflection layer. The inorganic antireflection layer means an antireflection layer composed of an inorganic compound.

The antireflection layer having a multilayer structure may have a structure in which a high refractive index layer and a low refractive index layer are alternately laminated.

The high refractive index layer preferably contains titanium, zirconium, aluminum, niobium, tantalum, or lanthanum oxide.

The low refractive index layer preferably contains a silica compound.

The thickness of the antireflection layer is preferably 0.2 to 3.0 µm, and more preferably 0.3 to 2.0 µm.

### [Method for Manufacturing Laminate]

Examples of a method for manufacturing the laminate include known manufacturing methods.

The method for manufacturing the laminate is preferably a method for manufacturing the laminate, the method including the steps of: forming a water- and oil-repellent layer on a spectacle lens substrate; forming a first temporary protective layer on the water- and oil-repellent layer; and forming a second temporary protective layer on the first temporary protective layer.

The step of forming the water- and oil-repellent layer is preferably a step of applying a water- and oil-repellent layer-forming composition onto the spectacle lens substrate and curing the water- and oil-repellent layer-forming composition.

Examples of a method for applying the water- and oil-repellent layer-forming composition include a dip coating method, a roll coating method, a bar coating method, a spin coating method, a spray coating method, a die coating method, and a gravure coating method.

Examples of the curing method include a drying method, and heating or non-heating may be performed during drying.

The water- and oil-repellent layer-forming composition is a composition containing various components and/or precursors thereof that can be contained in the water- and oil-repellent layer described above, and preferably further contains an organic solvent.

Examples of the step of forming the first temporary protective layer include dry film forming methods such as a physical vapor deposition method and a chemical vapor deposition method, and wet film forming methods such as a coating method, and a physical vapor deposition method is preferable.

Examples of the physical vapor deposition method include vapor deposition methods such as a thermal vapor deposition method and an electron beam vapor deposition method, and a sputtering method, and a thermal vapor deposition method or a sputtering method is preferable.

When the first temporary protective layer containing the titanium oxide is formed, it is preferable to perform vapor deposition or sputtering in an inert gas using the titanium oxide as a target. At this time, by performing vapor deposition or sputtering without supplying oxygen gas, it is easy to obtain a titanium oxide film having desired characteristics such that the first temporary protective layer can be easily removed and water- and oil-repellency after the removal of the first temporary protective layer can be maintained.

A substrate temperature during the film formation is preferably 27 to 75°C, and more preferably 27 to 50°C.

The dry film forming method and the wet film forming method may be performed under any of normal pressure, reduced pressure, and high pressure, and are preferably performed under reduced pressure.

A pressure at the start of film formation in the dry film forming method is preferably 4.0 x 10⁻³ Pa or less, and more preferably 3.5 x 10⁻³ Pa or less.

Examples of the step of forming the second temporary protective layer include dry film forming methods such as a physical vapor deposition method and a chemical vapor deposition method, and wet film forming methods such as a coating method, and a physical vapor deposition method is preferable.

Examples of the physical vapor deposition method include the methods described above, and a thermal vapor deposition method is preferable.

The dry film forming method and the wet film forming method may be performed under any of normal pressure, reduced pressure, and high pressure, and are preferably performed under reduced pressure.

It is also preferable that the method for manufacturing a laminate includes the steps of: forming a primer layer on a spectacle lens substrate; forming a hard coat layer on the primer layer; forming an antireflection layer on the hard coat layer; forming a water- and oil-repellent layer on the antireflection layer; forming a first temporary protective layer on the water- and oil-repellent layer; and forming a second temporary protective layer on the first temporary protective layer.

The steps of forming the water- and oil-repellent layer, the first temporary protective layer, and the second temporary protective layer are as described above.

The step of forming the primer layer is preferably a method for applying a primer layer-forming composition onto the spectacle lens substrate.

The step of forming the primer layer may include a drying step. Heating or non-heating may be performed during drying.

The step of forming the hard coat layer is preferably a method in which a hard coat layer-forming composition is applied onto the primer layer and cured.

Examples of a method for applying the hard coat layer-forming composition include the method for applying the water- and oil-repellent layer-forming composition described above. For example, when a dip coating method is used, a spectacle lens substrate including a primer layer is immersed in a hard coat layer-forming composition, and then the spectacle lens substrate including the primer layer is pulled up and dried, whereby a coating film derived from the hard coat layer-forming composition can be formed on the primer layer of the spectacle lens substrate.

Examples of the curing method include a heat treatment and an exposure treatment.

The heat treatment condition and the light irradiation treatment condition can be appropriately adjusted by various components contained in the hard coat layer-forming composition.

Examples of the type of light during light irradiation include ultraviolet rays and visible rays. Examples of a light source include a high-pressure mercury lamp.

An integrated light amount during light irradiation is preferably 100 to 10,000 mJ/cm², and more preferably 100 to 5,000 mJ/cm² from the viewpoint of productivity and the curability of the coating film.

Examples of the step of forming the antireflection layer include a method using a dry method such as a vacuum vapor deposition method, a sputtering method, an ion plating method, an ion beam assist method, and a CVD method.

### [Method for Manufacturing Spectacle Lens]

A method for manufacturing a spectacle lens of the present disclosure includes: a step 1 of pressing a fixing member against a second temporary protective layer of the laminate described above to fix the laminate, and grinding a peripheral edge of the laminate; and a step 2 of removing a first temporary protective layer and the second temporary protective layer of the ground laminate.

### <Step 1>

The step 1 is a step of processing the laminate into a predetermined shape by grinding the peripheral edge of the laminate, and is a so-called lens edging processing step. The grinding can be performed using a known grinding device.

FIG. 2 is a schematic view of a grinding device 300 in the step 1, and the step 1 will be described in detail with reference to FIG. 2.

First, a laminate 200 is disposed between a fixing member 60 and a lens processing shaft 52 such that the fixing member 60 is in contact with a second temporary protective layer 40 of the laminate 200, and the fixing member 60 is pressed against the second temporary protective layer 40 to fix the laminate 200. That is, the laminate 200 is pressed and fixed by the fixing member 60 and the lens processing shaft 52. In FIG. 2, the fixing member 60 includes a lens processing shaft 51, a lens lock cap 30 fixed to the tip end of the lens processing shaft 51, and an adhesive tape 20 bonded to the surface of a lens lock cap 30, and the surface of the adhesive tape 20 on the side opposite to the surface of the lens lock cap 30 is in contact with the second temporary protective layer 40 of the laminate 200, but the constitution of the fixing member 60 is not limited to such an aspect. In FIG. 2, the adhesive tape 20 has a three-layer structure having adhesive layers on both surfaces of a substrate, but is not limited to such an aspect.

Examples of the grinding device 300 include LE-9000X (manufactured by Nidek Corporation).

Examples of the adhesive tape 20 include LEAPIII (manufactured by 3M Company).

Next, while the laminate 200 is rotated by rotating the fixing member 60 and the lens processing shaft 52, a rotated grindstone is pressed against the peripheral edge of the laminate 200, so that the laminate 200 can be ground into a predetermined shape.

Examples of the grinding method in the step 1 include lens edging processings described in JP 2007-156226 A, JP 2003-141607 A, and JP 2007-505937 A.

### <Step 2>

The step 2 is a step of removing the temporary protective layer (the first temporary protective layer and the second temporary protective layer) in the ground laminate.

Examples of the method for removing the temporary protective layer include a method for removing the temporary protective layer by tape peeling, a method for removing the temporary protective layer using a peeling agent, a dry wiping method, and combinations thereof. From the viewpoint that the temporary protective layer can be efficiently removed, a method for removing the temporary protective layer by tape peeling or a method for removing the temporary protective layer using a peeling agent is preferable.

The first temporary protective layer and the second temporary protective layer may be removed at a time by a removal operation, may be sequentially removed, or are preferably removed at a time. When the temporary protective layers are sequentially removed, different removal methods may be used in combination.

Examples of the dry wiping include a method for rubbing the temporary protective layer using a wipe.

Examples of the tape peeling include a method for peeling the temporary protective layer using a known tape.

Examples of the peeling agent include an organic solvent such as an alcohol solvent, water, and a mixed solution thereof, and an alcohol solvent is preferable. The peeling agent may contain an anionic surfactant, a cationic surfactant, and/or an amphoteric surfactant.

The peeling agent may be any of acidic, neutral, and alkaline.

### EXAMPLES

Hereinafter, the present disclosure will be described in more detail with reference to examples, but the present disclosure is not limited by these examples at all.

### [Preparation of Substrate]

A thiourethane-based synthetic resin substrate having a refractive index of 1.60 was prepared as a spectacle lens substrate. A polyurethane primer layer (thickness: 1 µm) having a refractive index of 1.67 and a silicone-based hard coat layer (thickness: 3 µm) having a refractive index of 1.67 were formed in this order on the surface of the spectacle lens substrate. The primer layer and the hard coat layer were formed on both surfaces of the spectacle lens substrate. The hard coat layer is formed by thermally curing a hard coat layer-forming composition containing an organosilicon compound having an epoxy group (including a hydrolysate thereof and a hydrolysis condensate thereof) and composite oxide fine particles mainly composed of TiO₂.

The spectacle lens substrate on which the primer layer and the hard coat layer were formed was placed in a rotary dome in a vacuum chamber of a vacuum vapor deposition apparatus ("MC-1200DLX2", manufactured by Satisloh). The vacuum vapor deposition apparatus includes an ion source (Mark II+ manufactured by Veeco), and the ion source includes a neutralizer capable of applying electrons in the same direction as the irradiation direction of an ion beam.

After the spectacle lens substrate on which the primer layer and the hard coat layer were formed was placed, evacuation was performed until the degree of vacuum reached 3.5×10⁻³ Pa. After the evacuation, the surface of the spectacle lens substrate was cleaned by irradiating the spectacle lens substrate with an argon ion beam from the ion source. Cleaning conditions were adjusted so that an acceleration voltage was 90 V and the current density of the ion beam was 40 µA/cm². The cleaning was performed for 60 seconds. After the cleaning, first to sixth layers as a high refractive index layer and a low refractive index layer were formed so as to have the thicknesses of the layers described in Table 1 shown below. Zirconium oxide (ZrO₂) was used for forming the high refractive index layer, silicon oxide (SiO₂) was used for forming the low refractive index layer, and the high refractive index layer and the low refractive index layer were formed by a heating vapor deposition method by electron beam heating.

After the formation of the sixth layer (low refractive index layer), the low refractive index layer was irradiated with an argon ion beam having a current density of 40 µA/cm² from the ion source. The acceleration voltage of the ion source was set to 72 V, and the irradiation time of the ion beam was set to 75 seconds. After the irradiation with the argon ion beam, a seventh layer (high refractive index layer) was formed, and after the formation of the seventh layer, an eighth layer (SnO₂ layer) was formed with the thickness shown in Table 1. After the eighth layer was formed, a ninth layer (low refractive index layer) was formed. The formation method is similar to that of the first to sixth layers described above. Thus, an antireflection layer including the first to ninth layers was formed.

Then, a 20 nm-thick 10th layer (water- and oil-repellent layer) was formed on the surface of the ninth layer using a water- and oil-repellent material X-12-5263HP (manufactured by Shin-Etsu Chemical Co., Ltd.), and a 20 nm-thick 11th layer (water- and oil-repellent layer) was formed on the surface of the 10th layer using a water- and oil-repellent material DSX (manufactured by Daikin Industries, Ltd.). A method for forming each layer is the same as that of the first to ninth layers described above.

A multilayer film was formed on one surface of the spectacle lens substrate by the above procedure. After the multilayer film was formed on one surface of the spectacle lens substrate, the spectacle lens substrate was turned over and installed in the vacuum vapor deposition apparatus, and a multilayer film was formed on the other surface by the same procedure.

As a result, the laminated substrate including the water- and oil-repellent layer, the antireflection layer, the hard coat layer, the primer layer, the spectacle lens substrate, the primer layer, the hard coat layer, the antireflection layer, and the water- and oil-repellent layer in this order was prepared.

In Table 1, H1 to H4 are materials for forming the high refractive index layer, and L1 to L4 are materials for forming the low refractive index layer. In Table 1, the thickness of each layer was a physical thickness, and was measured using a quartz crystal film thickness meter.

**[Table 1]**

| Table 1 | Materials | | Thickness [nm] |
|---|---|---|---|
| First layer | H1 | ZrO₂ | 13 |
| Second layer | L1 | SiO₂ | 73 |
| Third layer | H2 | ZrO₂ | 13 |
| Fourth layer | L2 | SiO₂ | 415 |
| Fifth layer | H3 | ZrO₂ | 23 |
| Sixth layer | L3 | SiO₂ | 26 |
| Seventh layer | H4 | ZrO₂ | 87 |
| Eighth layer | - | SnO₂ | 6.5 |
| Ninth layer | L4 | SiO₂ | 91 |
| 10th layer | Water- and oil-repellent | X-12-5263HP | 20 |
| 11th layer | Water- and oil-repellent | DSX | 20 |

### [Examples 1 to 9]

Laminates of Examples 1 to 9 were produced by the following procedure.

A first temporary protective layer was formed on one surface of the laminated substrate formed by the method described above by the following method.

A magnesium fluoride layer was formed on a water- and oil-repellent layer of a spectacle lens 1 by a thermal vapor deposition method using a physical vapor deposition apparatus (BC-P: manufactured by Shincron Co., Ltd., or 1200-DLX2: manufactured by Satisloh) while the thickness of the magnesium fluoride layer was adjusted so as to have film thicknesses shown in the following Tables. The magnesium fluoride layer was formed under reduced pressure (1×10⁻³ to 1×10⁻² Pa) using a heating vapor deposition method by electron beam heating.

Next, a second temporary protective layer was formed on the first temporary protective layer by the following method.

An aluminum layer having a purity of 99% by mass or more was formed on the first temporary protective layer of the spectacle lens 1 by a thermal vapor deposition method using a physical vapor deposition apparatus (BC-P: manufactured by Shincron Co., Ltd., or 1200-DLX2: manufactured by Satisloh) while the thickness of the aluminum layer was adjusted so as to have film thicknesses shown in the following Tables. The aluminum layer was formed under reduced pressure (1×10⁻³ to 1×10⁻² Pa) using a heating vapor deposition method by electron beam heating.

### [Example 10]

A first temporary protective layer was formed on one surface of the laminated substrate formed by the method described above by the following method.

A titanium oxide layer was formed on a water- and oil-repellent layer of a spectacle lens 1 by a thermal vapor deposition method using the physical vapor deposition apparatus (BC-P: manufactured by Shincron Co., Ltd., or 1200-DLX2: manufactured by Satisloh) while the thickness of the titanium oxide layer was adjusted so as to have a film thickness shown in the following Table. The titanium oxide layer was formed under reduced pressure (1 x 10⁻³ to 1 x 10⁻² Pa) using a heating vapor deposition method by electron beam heating.

Next, a second temporary protective layer was formed on the first temporary protective layer in the same manner as in Examples 1 to 9 described above.

### [Comparative Examples 1 to 3]

In a laminate of Comparative Example 1, the laminated substrate formed by the above-described method was used as it is for evaluation described later.

In a laminate of Comparative Example 2, a first temporary protective layer was formed according to the method of Examples 1 to 9, and then the laminate was used for evaluation without forming a second temporary protective layer.

A laminate of Comparative Example 3 was prepared by forming a second temporary protective layer according to the method of Examples 1 to 9 without forming the first temporary protective layer described above.

### [Comparative Example 4]

A first temporary protective layer was formed on one surface of the laminated substrate formed by the method described above by the following method.

A SiO₂ layer was formed on a water- and oil-repellent layer of a spectacle lens 1 by a thermal vapor deposition method using the physical vapor deposition apparatus (BC-P: manufactured by Shincron Co., Ltd., or 1200-DLX2: manufactured by Satisloh) while the thickness of the SiO₂ layer was adjusted so as to have a film thickness shown in the following Table. The SiO₂ layer was formed under reduced pressure (1 x 10⁻³ to 1 x 10⁻² Pa) using a heating vapor deposition method by electron beam heating.

Subsequently, a second temporary protective layer was formed according to the method of Examples 1 to 9 to prepare a laminate.

### [Comparative Example 5]

A laminate of Comparative Example 5 was prepared by forming a first temporary protective layer on one surface of the laminated substrate formed by the method described above according to the method of Examples 1 to 9 described above, and then forming a second temporary protective layer on the first temporary protective layer according to the method for forming a SiO₂ layer of Example 4.

### [Evaluation]

### <Ease of Lens Edging>

A step 1 (lens edging) was performed by the following method, and an axial deviation and a horizontal deviation after grinding were measured to evaluate the ease of lens edging.

The optical center of the laminate was specified using a lens meter (LM-1200, manufactured by Nidek Corporation), and a total of three points including the optical center on any straight line passing through the optical center were marked on the second temporary protective layer (when the second temporary protective layer is not provided, the first temporary protective layer or the laminated substrate) of the laminate at equal intervals. Then, using a lens blocker (CE-1, manufactured by Nidek Corporation), a double-sided tape (LEAPIII, manufactured by 3M Company) was attached around a point shifted from the optical center of the laminate by an amount of eccentricity (a point shifted from the optical center of the laminate by 5 mm on a straight line passing through the above three points), and a lens lock cap was further attached thereon.

After the lens lock cap to which the laminate was attached was fitted into one lens processing shaft of a lens edging machine, the laminate was sandwiched and fixed between the lens lock cap and the other processing shaft, and lens edging processing was performed with the amount of eccentricity set to zero on a lens edging machine side. Devices and instruments used for the lens edging processing are shown below. The spectacle lens was also subjected to lens edging processing by the same procedure as in the laminate.
- Lens edging machine: LE-9000 X (manufactured by Nidek Corporation), chuck pressure value: 50 kg
- Lens shape: Nikon Clasio, product number 9018 (having an approximately octagonal shape with a breadth of 48 mm and a height of 30 mm)
- Lens lock cap: minimum-size cap (manufactured by Nidek Corporation)

The positions of the marked three points on the ground laminate were evaluated by PROFILE PROJECTOR V-16E (manufactured by Nikon Corporation), and the axial deviation (rotational axis deviation amount) and the horizontal deviation (parallel axis deviation amount) from design values were measured and evaluated according to the following evaluation criteria.

### -Evaluation Criteria for Axial Deviation-

"A": The absolute value of axial deviation is 1.000° or less.

"B": The absolute value of axial deviation is more than 1.000°

### -Evaluation criteria for horizontal deviation-

"A": The absolute value of horizontal deviation is 0.500 mm or less.

"B": The absolute value of horizontal deviation is more than 0.500 mm.

In the laminate of Comparative Example 1, the lens lock cap was not attached, and the lens edging processing could not be performed.

### <Water- and Oil-Repellency after Peeling of Temporary Protective Layer>

The first temporary protective layer and the second temporary protective layer of the ground laminate in the evaluation of the axial deviation and the horizontal deviation were removed by tape peeling. The tape peeling was performed by attaching a Nichiban 405 cellophane tape (width: 18 mm, length: 10 mm) to the second temporary protective layer and peeling the tape. Also in all of Examples and Comparative Examples other than Comparative Example 4 and Comparative Example 5, the first temporary protective layer and the second temporary protective layer were removed at a time by the tape peeling.

After the first temporary protective layer and the second temporary protective layer were removed, a line was drawn on the removed surface using permanent marker No. 500 black (for fine writing) (Teranishi Chemical Industry Co., Ltd.), and the water- and oil-repellency after removal of the temporary protective layer was evaluated according to the following criteria.

"A": The ink becomes a dotted line, and the length of the point is 2 mm or less.

"B": The ink becomes a solid line or a dotted line, and the length of the point may exceed 2 mm.

In the laminates of Comparative Example 4 and Comparative Example 5, the temporary protective layer could not be peeled by tape peeling.

### [Results]

The materials and film thicknesses of the first temporary protective layer and the second temporary protective layer, and the evaluation results are shown in the following Tables.

In Tables, the thickness of each layer was measured by the quartz crystal film thickness meter.

In Tables, the numerical value of each of the axial deviation and the horizontal deviation indicates the absolute value of the deviation amount.

"-" in evaluation columns means that evaluation could not be performed.

**[Table 2]**

| Table 2 | | Comparative Example 1 | Comparative Example 2 | Comparative Example 3 | Comparative Example 4 | Comparative Example 5 |
|---|---|---|---|---|---|---|
| First temporary protective layer | Materials | - | MgF₂ | - | SiO₂ | MgF₂ |
| | Film thickness [nm] | - | 10 | - | 10 | 20 |
| Second temporary protective layer | Materials | - | - | Al | Al | SiO₂ |
| | Film thickness [nm] | - | - | 10 | 10 | 20 |
| Evaluation of lens edging | Axial deviation | - | C | A | A | A |
| | (°) | - | 3.15 | 0.18 | 0.12 | 0.45 |
| | Horizontal deviation | - | A | A | A | A |
| | (mm) | - | 0.37 | 0.33 | 0.1 | 0.11 |
| Tape peeling | | - | Possible | Possible | Impossible | Impossible |
| Water- and oil-repellency after peeling | | - | A | B | - | - |

**[Table 3]**

| Table 3 | | Example 1 | Example 2 | Example 3 | Example 4 | Example 5 |
|---|---|---|---|---|---|---|
| First temporary protective | Materials | MgF₂ | MgF₂ | MgF₂ | MgF₂ | MgF₂ |
| | Film | 5 | 10 | 5 | 10 | 10 |
| layer | thickness [nm] | | | | | |
| Second temporary protective layer | Materials | Al | Al | Al | Al | Al |
| | Film thickness [nm] | 15 | 15 | 20 | 40 | 80 |
| Evaluation of lens edging | Axial deviation | A | A | A | A | A |
| | (°) | 0.02 | 0.2 | 0.52 | 0 | 0 |
| | Horizontal deviation | A | A | A | A | A |
| | (mm) | 0.36 | 0.13 | 0.13 | 0.23 | 0.32 |
| Tape peeling | | Possible | Possible | Possible | Possible | Possible |
| Water- and oil-repellency after peeling | | A | A | A | A | A |

**[Table 4]**

| Table 4 | | Example 6 | Example 7 | Example 8 | Example 9 | Example 10 |
|---|---|---|---|---|---|---|
| First temporary protective layer | Materials | MgF₂ | MgF₂ | MgF₂ | MgF₂ | Ti₂O₃ |
| | Film thickness [nm] | 50 | 100 | 200 | 200 | 40 |
| Second temporary protective layer | Materials | Al | Al | Al | Al | Al |
| | Film thickness [nm] | 10 | 10 | 10 | 80 | 10 |
| Evaluation of lens edging | Axial deviation | A | A | A | A | A |
| | (°) | 0.03 | 0.02 | 0.02 | 0 | 0.02 |
| | Horizontal deviation | A | A | A | A | A |
| | (mm) | 0.06 | 0.47 | 0.45 | 0.2 | 0.13 |
| Tape peeling | | Possible | Possible | Possible | Possible | Possible |
| Water- and oil-repellency after peeling | | A | A | A | A | A |

From the evaluation results, it was confirmed that the laminate of the present disclosure was easily subjected to lens edging and had excellent water- and oil-repellency after the first temporary protective layer and the second temporary protective layer were peeled.

From the comparison of Examples 1 to 9, it was confirmed that when the thickness of the first temporary protective layer was more than 10 nm and less than 100 nm, lens edging was more easily performed.

- 2: spectacle lens substrate
- 4: water- and oil-repellent layer
- 6: first temporary protective layer
- 8: second temporary protective layer
- 20: adhesive tape
- 30: lens lock cap
- 40: second temporary protective layer
- 51, 52: lens processing axis
- 60: fixing member
- 100, 200: laminate
- 300: grinding device

## Claims

1. A laminate comprising a spectacle lens substrate, a water- and oil-repellent layer, a first temporary protective layer, and a second temporary protective layer in this order,
wherein the first temporary protective layer contains a metal fluoride or titanium oxide, and
the second temporary protective layer is a metal layer.

2. The laminate according to claim 1, wherein the metal layer contains at least one selected from the group consisting of aluminum, copper, zinc, and nickel.

3. The laminate according to claim 1 or 2, wherein the first temporary protective layer contains the metal fluoride, and
a thickness of the second temporary protective layer is more than 10 nm, and a total thickness of the first temporary protective layer and the second temporary protective layer is 20 nm or more.

4. The laminate according to any one of claims 1 to 3, wherein the metal fluoride is magnesium fluoride.

5. The laminate according to claim 1 or 2, wherein the first temporary protective layer contains the titanium oxide, and
the first temporary protective layer has a thickness of more than 20 nm and less than 80 nm.

6. The laminate according to any one of claims 1 to 4, wherein the first temporary protective layer has a thickness of more than 10 nm and less than 100 nm.

7. A method for manufacturing a spectacle lens using the laminate according to any one of claims 1 to 6, the method comprising:
a step 1 of pressing a fixing member against the second temporary protective layer to fix the laminate, and grinding a peripheral edge of the laminate; and
a step 2 of removing the first temporary protective layer and the second temporary protective layer in the ground laminate.
